# EUROPÄISCHE PATENTSCHRIFT

(11) **EP 3 440 922 B1**
(45) Veröffentlichungstag und Bekanntmachung des Hinweises auf die Patenterteilung: **15.07.2020**
(21) Anmeldenummer: 18187961.0
(22) Anmeldetag: 08.08.2018
(51) Int. Cl.: A01D 90/08, A01D 90/10

(54) **BALLENTRANSPORTWAGEN**
BALE TRANSPORT CARRIAGE
CHARIOT DE TRANSPORT DES BALLOTS

(30) Priorität: 09.08.2017 AT 506672017
(43) Veröffentlichungstag der Anmeldung: 13.02.2019
(73) Patentinhaber: Austrex Handels-Ges.m.b.h., 4181 Oberneukirchen/ Oö (AT)
(72) Erfinder: BURGSTALLER, Reinhard, 4181 Oberneukirchen (AT)
(74) Vertreter: Burgstaller, Peter

(56) Entgegenhaltungen:
- DE-U1- 20 022 895
- US-A- 5 639 199
- US-A1- 2007 031 229
- US-A1- 2017 105 349
- US-B1- 7 004 706

## Beschreibung

Die Erfindung betrifft einen Ballentransportwagen mit Rollenbahn und einer Hebevorrichtung zum Auf- und Abladen von Rundballen.

Ein Ballentransportwagen ist meist ein Zuganhänger, der an einem Zugfahrzeug wie einem Traktor angehängt wird und daher in der Regel nicht selbstfahrend ist. Ballen werden nach der Herstellung eingesammelt. Dazu gibt es verschiedene Techniken, wie den Einzeltransport mittels eigener Silozange zum gewünschten Lagerort oder auf einen Anhänger oder das Verladen mit einer Kombination aus Anhänger und Heber. Der Heber befördert den Ballen meist auf eine Transportbahn, die dann die Ballen auf der Ladefläche des Ballentransportwagens nach hinten befördert. Zum Entladen werden die Rundballen entweder durch Anheben der Ladefläche nach hinten abgeladen oder die Ladefläche wird zur Seite gekippt, sodass die Ballen seitlich herunterfallen. Insbesondere bei Siloballen besteht dabei die Gefahr den Ballen bzw. dessen Hülle zu beschädigen.

Ein Siloballen ist ein Grasballen der von einer Ballenpresse aufgewickelt, verdichtet und mit einem Ballenwickelgerät mit Folie verschlossen wird. Der Balleninhalt fermentiert im Laufe der Zeit und dient als Viehfutter. Um ein gesundes Viehfutter zu erhalten, soll die Folie unbeschädigt sein. Beschädigungen der Folie können vor allem beim Verladen und Entladen passieren.

Ein Siloballen wiegt ca. 800 kg. Deshalb ist es besonders wichtig, auf einen sorgfältigen Umgang zu achten, da aufgrund der runden Form ein ins Rollenkommen und damit verbundene mögliche Unfälle passieren können. Selbiges gilt natürlich auch für andere Rundballen wie beispielsweise nicht folierte Heuballen und Strohballen.

Die US4329102 zeigt einen Ballentransportwagen mit Heber und Transportbahn. Der Heber hebt Ballen in die Transportbahn. Das Abladen erfolgt dadurch, dass Ballen von der Transportbahn am hinteren Ende des Ballentransportwagens abgeworfen werden.

Die IT1232586 zeigt einen Ballentransportwagen mit v- förmiger Rollenbahn und Hebevorrichtung zum Aufladen. Nachteilig ist, dass das Abladen nur durch Anheben der Ladefläche bis zum senkrechten Aufstellen des gesamten Ballenstapels funktioniert.

Die GB2007184 zeigt einen Ballentransportwagen ohne Rollenbahn, der einen Heber zum Auf- und Abladen von Ballen aufweist. Das Abladen erfolgt, indem ein Hebelarm des Hebers den Ballen seitlich vom Ballentransportwagen herunterschiebt, sodass dieser von der Kante der Ladefläche in den Heber hinunterfällt. Nachteilig sind das Fehlen einer Rollenbahn, sowie die Methode des Abladens durch Herunterschieben des Ballens. Das Herunterschieben scheint insbesondere nachteilig, da dies nur bei flachen Ladeflächen zu funktionieren scheint, welche dem Ballen keinen ausreichenden seitlichen Halt geben. Zudem scheint nachteilig, dass der Hebelarm kleinflächig am Ballen andrückt, was insbesondere bei schweren Siloballen zu Beschädigungen führen kann.

Die US5639199A zeigt ein Ballentransportfahrzeug mit einer nach vorne gerichteten Rampe mit Förderband, welches die Ballen entlang der Rampe hinauf auf die Ladefläche des Ballentransportfahrzeugs befördert.

Die US7004706 B1 zeigt einen Ballentransportwagen, welcher einen seitlich schwenkbaren Ausleger mit Rollenbahn aufweist. Am seitlich schwenkbaren Ausleger ist eine Hebevorrichtung vorhanden, deren Schwenkachse um 90° gedreht zur Schwenkachse des Auslegers liegt. Die Rollen der Rollenbahn des Auslegers sind mit iher Längsrichtung in Fahrtrichtung des Ballentransportwagens angeordnet. Nachteilig ist, dass die Rollenbahn des Auslegers nicht Teil einer Rollenbahn der Ladefläche des Ballentransportwagens ist. Die Vorrichtung scheint nicht geeignet um über den seitlich schwenkbaren Ausleger und die am seitlich schwenkbaren Ausleger befestigte Hebevorrichtung einen Rundballen abladen zu können.

Die DE 200 22 895 U offenbart einen Ballentransportwagen mit einer schwenkbaren Hebevorrichtung und einer Rollenbahn, mit quer zur Fahrtrichtung ausgerichteten Rollen. Die Rollenbahn kann nicht in Richtung der Hebevorrichtung verschwenkt werden.

Die der Erfindung zu Grunde liegende Aufgabe besteht darin, ein sicheres und gezieltes Be- und Entladen eines Ballentransportwagens zu ermöglichen, wobei die gesamte Ladefläche nutzbar sein soll und das Ladegut möglichst schonend und sicher gehandhabt werden soll.

Für das Lösen der Aufgabe wird ein Ballentransportwagen vorgeschlagen, der eine Ladefläche mit Rollenbahn aufweist, wobei die Längsachsen der Rollen der Rollenbahn quer zur Fahrtrichtung des Ballentransportwagens angeordnet sind, wobei der Ballentransportwagen seitlich eine Hebevorrichtung zum Aufladen von Ballen aufweist, wobei jener Teil der Rollenbahn, an welchem sich seitlich die Hebevorrichtung befindet, ein schwenkbarer Abschnitt der Rollenbahn ist, der mit einer Schwenkvorrichtung in jene Richtung schwenkbar ist, an der sich die Hebevorrichtung befindet.

Dadurch wird erreicht, dass die Ballen am Ballentransportwagen in dessen Längsrichtung auf der Rollenbahn transportierbar sind und mit der Hebevorrichtung Ballen sowohl auf die Rollenbahn aufgeladen als auch von dieser wieder abgeladen werden können. Da die Hebevorrichtung seitlich an einem schwenkbaren Abschnitt der Rollenbahn vorgesehen ist, wirkt die Hebevorrichtung beim Abladen mit dem schwenkbaren Abschnitt zusammen. Beim Abladen wird der Ballen von der Rollenbahn an die Hebevorrichtung übergeben, indem diese seitlich geschwenkt wird, bis der Ballen entlang seiner runden Mantelfläche auf der Längsseite der Rollen der Rollenbahn in Richtung der Hebevorrichtung abrollt und von dieser sicher gehalten wird, bis er am Boden abgelegt ist. Bevorzugt können die Hebevorrichtung und der schwenkbare Abschnitt der Rollenbahn auch beim Aufladen von Ballen zusammenwirken, da so der Ballen sanfter auf der Rollenbahn abgelegt werden kann, da dies dem Ballen entgegenkommen kann. Um einen Ballen aufzuladen, wird dabei der Ballentransportwagen seitlich hinter dem Ballen platziert und es wird der schwenkbare Abschnitt der Rollenbahn und die Hebevorrichtung ausgeschwenkt. Danach wird der Ballentransportwagen beispielsweise durch eine Zugmaschine vorwärts bewegt, sodass der Ballen in die Hebevorrichtung gelangt und von dieser um- bzw. untergriffen wird. Durch Anheben bzw. Schwenken der Hebevorrichtung wird der Ballen gegen den schwenkbaren Abschnitt der Rollenbahn gedrückt, bzw. auf diesen hinaufgeschoben. Im nächsten Schritt wird der schwenkbare Abschnitt der Rollenbahn in die Horizontale geschwenkt, sodass der Ballen auf diesem zu liegen kommt. Sobald der Ballen auf der Rollenbahn abgelegt ist, kann dieser auf der Rollenbahn verschoben werden.

Bevorzugt ist die Rollenbahn v-förmig ausgeführt, indem diese zwei Bahnen aufweist, deren Rollen jeweils parallel zueinander in Fahrtrichtung des Ballentransportwagens aufeinanderfolgen, wobei die Längsachsen der Rollen quer zur Fahrtrichtung und von der Mitte des Ballentransportwagens zum Rand hin ansteigend liegen. Vorteilhaft daran ist, dass Rundballen mit unterschiedlicher Größe auf der Rollenbahn abgelegt werden können und unabhängig von der Größe gut durch die v-förmigen Schenkel der Rollenbahn seitlich gestützt werden, sodass auch kleine Ballen beispielsweise in Kurven nicht ins Rollen kommen.

Bevorzugt sind die Rollen der Rollenbahn angetrieben, sodass aufgeladen Ballen auf der Rollenbahn automatisiert verschoben werden können.

Bevorzugt weist der schwenkbare Abschnitt der Rollenbahn angetriebene Rollen auf, wobei der Antrieb des schwenkbaren Abschnitts unabhängig vom Antrieb der restlichen Rollenbahn des Ballentransportwagens ist.

Bevorzugt weist die Rollenbahn in Längsrichtung des Ballentransportwagens zusätzlich zum schwenkbaren Abschnitt weitere antriebsmäßig getrennte Abschnitte auf, wobei die Rollen jedes Abschnitts unabhängig von den anderen Abschnitten angetrieben werden.

Bevorzugt entspricht die Länge jedes Abschnitts in etwa der Höhe eines üblichen Rundballens.

Bevorzugt finden auf dem an den schwenkbaren Abschnitt anschließenden Abschnitt bzw. den anschließenden Abschnitten zumindest zwei insbesondere drei Rundballen Platz.

Bevorzugt erfolgt der Antrieb der Rollen über einen Riemen- oder Kettenantrieb, welcher alle Rollen bzw. alle Rollen eines Abschnitts gemeinsam antreibt.

Bevorzugt sind die Rollen im nicht angetriebenen Zustand gegen Drehung gesperrt bzw. wahlweise sperrbar.

Bevorzugt ist der schwenkbare Abschnitt der Rollenbahn dadurch gebildet, dass die beiden v-förmig zueinander stehenden Rollenflächen bzw. Schenkel der Rollenbahn gemeinsam in starrer Ausrichtung zueinander an einer Rahmenkonstruktion befestigt sind, wobei die Rahmenkonstruktion um eine Achse parallel zur Längsrichtung des Ballentransportwagens schwenkbar ist.

Weniger bevorzugt, kann lediglich die der Hebevorrichtung zugewandte Rollenfläche bzw. Schenkel der Rollenbahn schwenkbar sein oder beide Rollenflächen bzw. Schenkel einzeln schwenkbar sein.

Bevorzugt umfasst die Hebevorrichtung eine Ballengabel.

Bevorzugt ist die Ballengabel am schwenkbaren Rahmen des schwenkbaren Abschnitts der Rollenbahn angebracht, sodass die Zinken der Ballengabel mit dem schwenkbaren Abschnitt mitgeschwenkt werden.

Bevorzugt liegt die dem schwenkbaren Abschnitt zugewandte Zinke der Ballengabel in gerader Verlängerung der der Ballengabel zugewandten Rollenfläche vor. Bevorzugt ist zwischen der besagten Zinke und der besagten Rollenfläche eine Platte angeordnet, wobei die Zinke, die Platte und die Rollen zumindest annähernd flächenbündig zueinander liegen. Bevorzugt ist die besagte Zinke dadurch gebildet, dass diese ein abgerundeter oder umgebogener Randbereich der besagten Platte ist, sodass anstelle der Zinke eine Aufnahmeplatte vorliegt, bzw. die Zinke als Aufnahmeplatte ausgeführt ist.

Bevorzugt sind die besagte Zinke und die Platte, bzw. besagte Aufnahmeplatte und der schwenkbare Abschnitt der Rollenbahn gemeinsam am schwenkbaren Rahmen in starrer Ausrichtung zueinander angebracht.

Die dem schwenkbaren Abschnitt zugewandte Zinke bzw. Aufnahmeplatte der Ballengabel ist mit einem Arm mit der zweiten Zinke verbunden, sodass die beiden Zinken parallel beabstandet zueinander vorliegen und somit einen Ballen beidseitig untergreifen können.

Bevorzugt ist der besagte Arm als Teleskoparm ausgeführt, sodass der Abstand zwischen den beiden Zinken geändert, bevorzugt gesteuert werden kann. Mit dem Teleskoparm können vorteilhaft Rundballen unterschiedlicher Größe auf und abgeladen werden.

Bevorzugt ist die Ballengabel schwenkbar am schwenkbaren Abschnitt der Rollenbahn oder am Fahrgestell befestigt, wobei die Schwenkachse der Ballengabel wiederum parallel zur Längs- bzw. Fahrtrichtung des Ballentransportwagens liegt.

Bevorzugt ist lediglich der Arm, insbesondere Teleskoparm, schwenkbar am schwenkbaren Abschnitt der Rollenbahn befestigt, wobei die Schwenkachse nahe bzw. in der Längsachse der dem schwenkbaren Abschnitt zugewandte Zinke bzw. in der Mittellinie der Rundung der Aufnahmeplatte liegt.

Das Schwenken des schwenkbaren Abschnitts der Rollenbahn und des Arms, insbesondere Teleskoparms erfolgt bevorzugt durch Hubzylinder insbesondere Hydraulikzylinder, welche an Schwenkarmen bzw. Schwenkhebeln ansetzen.

Bevorzugt weist der Ballentransportwagen einen starren Rahmen auf, welcher nach oben hin beabstandet zur Rollenbahn den gesamten Ballentransportwagen umrundet, mit Ausnahme des Bereichs, in welchem sich die Hebevorrichtung befindet.

Bevorzugt weist der Ballentransportwagen ein Fahrgestell aus Profilelementen auf, wobei das Fahrgestell zumindest eine Achse mit zwei Reifen aufweist und die Rollenbahn am Fahrgestell montiert ist. Bevorzugt weist der Ballentransportwagen, wie bei einachsigen Anhängern üblich, am vorderen Ende ein Stützrad auf, welches in seiner Höhe veränderlich ist. Alternativ kann der Ballentransportwagen auch als mehrachsiger Anhänger oder auch selbstfahrend ausgeführt sein.

Beispielsweise erfolgt die Steuerung der Rollenbahn und des Hebers in der Kabine der Zugmaschine, beispielsweise durch dort verbaute Schalter oder durch eine Fernbedienung. Die koordinierte Bewegung bzw. der Bewegungsablauf der Ballengabel und des schwenkbaren Abschnitts der Rollenbahn kann dabei automatisiert erfolgen.

Bevorzugt wird über Sensoren und/oder aus dem Energiebedarf des Antriebs der Abschnitte der Rollenbahn festgestellt bzw. gespeichert, auf welchen Abschnitten sich Rollenballen befinden.

Um bei einer besonders bevorzugten Ausführungsvariante einen Ballen aufzuladen, wird der Ballentransportwagen seitlich hinter dem Ballen platziert und es wird der schwenkbare Abschnitt der Rollenbahn und somit auch die Aufnahmegabel ausgeschwenkt, bis die beiden Zinken der Aufnahmegabel knapp oberhalb des Bodens in etwa parallel zu diesem ausgerichtet sind. Danach fährt die Zugmaschine vorwärts, sodass der Ballen zwischen die Zinken gelangt. Wenn nötig kann nun der Abstand der Zinken über den Teleskoparm verkürzt werden. Durch Anheben bzw. Schwenken der Ballengabel kommen die Zinken an der Wölbung des Ballens zur Anlage, wodurch bei weiterem Anheben bzw. Schwenken der Ballengabel der Ballen gegen den schwenkbaren Abschnitt der Rollenbahn gedrückt wird. Im nächsten Schritt wird durch Schwenken des schwenkbaren Abschnitts der Rollenbahn in die Horizontale der Ballen auf diesem abgelegt. Die Bewegung, insbesondere Schwenkbewegung der Ballengabel und der Rollenbahn kann dabei zeitlich überlappend erfolgen.

Sobald der Ballen auf dem schwenkbaren Abschnitt der Rollenbahn abgelegt ist, kann dieser auf der Rollenbahn bis zu einem freien Abschnitt dieser verschoben werden. Bevorzugt erfolgt das Verschieben dadurch, dass alle vor der Aufnahme des Ballens noch freien Abschnitte der Rollenbahn angetrieben werden, bis der Ballen vollständig am letzten freien Abschnitt der Rollenbahn zu liegen kommt.

Ein sicheres Abladen ist bei dieser besonders bevorzugten Ausführungsvariante in umgekehrter Reihenfolge möglich. Die Rollenbahn befördert einen Ballen auf den schwenkbaren Abschnitt der Rollenbahn. Danach wird der schwenkbare Abschnitt der Rollenbahn ausgeschenkt. Dabei rollt oder gleitet der Ballen in Längsrichtung der Rollen der Rollenbahn, bis dieser durch die Zinken der Ballengabel gehalten wird. Durch Ausschwenken der Ballengabel und bevorzugt weiteres Ausschwenken der Rollenbahn wird der Ballen an den Boden angenähert und schließlich auf diesem abgelegt. Wenn die Ballengabel vollständig ausgeschwenkt ist, liegen der Zinken in etwa parallel zum Boden und unterhalb etwas beabstandet zur Wölbung des Ballens vor. Optional kann auch der Teleskoparm der Ballengabel ausgefahren werden, um den Ballen freizugeben. Sobald der Ballen freigegeben ist, kann durch Rückwärtsbewegung des Ballentransportwagens die Hebevorrichtung vom Ballen entfernt werden und hinter dem Ballen der nächste Ballen abgelegt werden.

Die Erfindung wird an Hand von Zeichnungen veranschaulicht:
- Fig. 1: zeigt schematisch einen erfindungsgemäßen Ballentransportwagen in Ansicht von vorne mit ausgeschwenkter Hebevorrichtung.
- Fig. 2: zeigt schematisch den erfindungsgemäßen Ballentransportwagen in Ansicht von vorne mit eingeschwenkter Hebevorrichtung.
- Fig. 3: zeigt einen bevorzugten erfindungsgemäßen Ballentransportwagen mit einem ausgeschwenkten Abschnitt der Rollenbahn in perspektivischer Ansicht von vorne links.
- Fig. 4: zeigt den bevorzugten erfindungsgemäßen Ballentransportwagen in Ansicht von vorne mit voll ausgeschwenkter Hebevorrichtung bei Aufnahme eines Rundballens.
- Fig. 5: zeigt den bevorzugten erfindungsgemäßen Ballentransportwagen in Ansicht von vorne mit angehobenen Rundballen.
- Fig. 6: zeigt den bevorzugten erfindungsgemäßen Ballentransportwagen in Ansicht von vorne mit voll eingeschwenkter Hebevorrichtung und aufgeladenem Rundballen.
- Fig. 7: zeigt den bevorzugten erfindungsgemäßen Ballentransportwagen in einer perspektivischen Ansicht von vorne links im geschlossenen Zustand.
- Fig. 8: zeigt den bevorzugten erfindungsgemäßen Ballentransportwagen in einer perspektivischen Ansicht mit teilweise ausgeschwenktem Abschnitt der Rollenbahn.
- Fig. 9: zeigt den bevorzugten erfindungsgemäßen Ballentransportwagen in einer perspektivischen Ansicht mit voll ausgeschwenktem Abschnitt der Rollenbahn.
- Fig. 10: Zeigt den bevorzugten erfindungsgemäßen Ballentransportwagen in einer perspektivischen Ansicht mit voll ausgeschwenkter Hebevorrichtung und Veranschaulichung der Funktion des Teleskoparms.

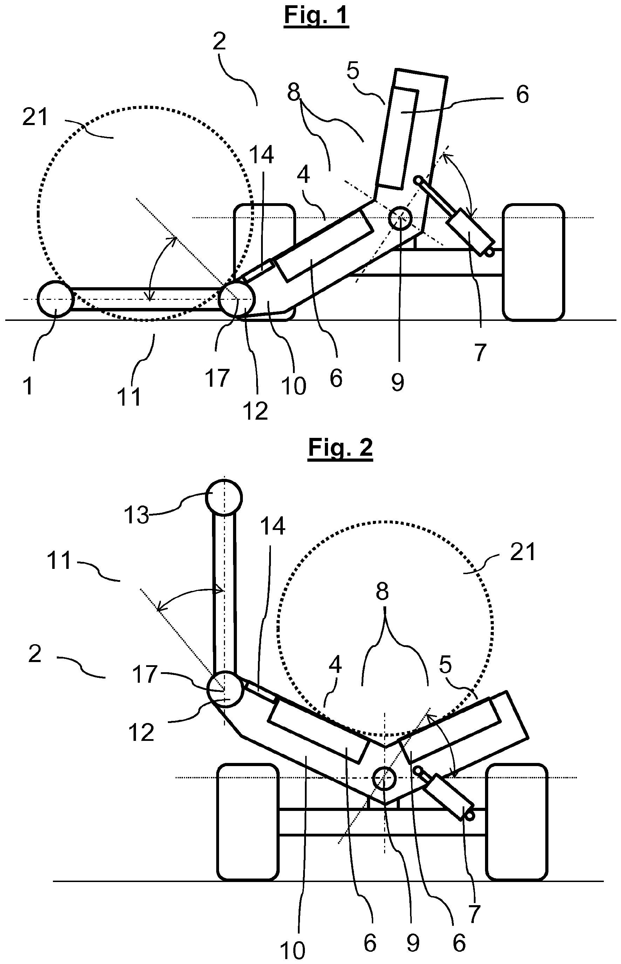

Die Fig. 1 und 2 zeigen schematisch die Funktionsweise des erfindungsgemäßen Ballentransportwagens 1, wobei nur die Hebevorrichtung 2 und das Fahrgestell dargestellt sind.

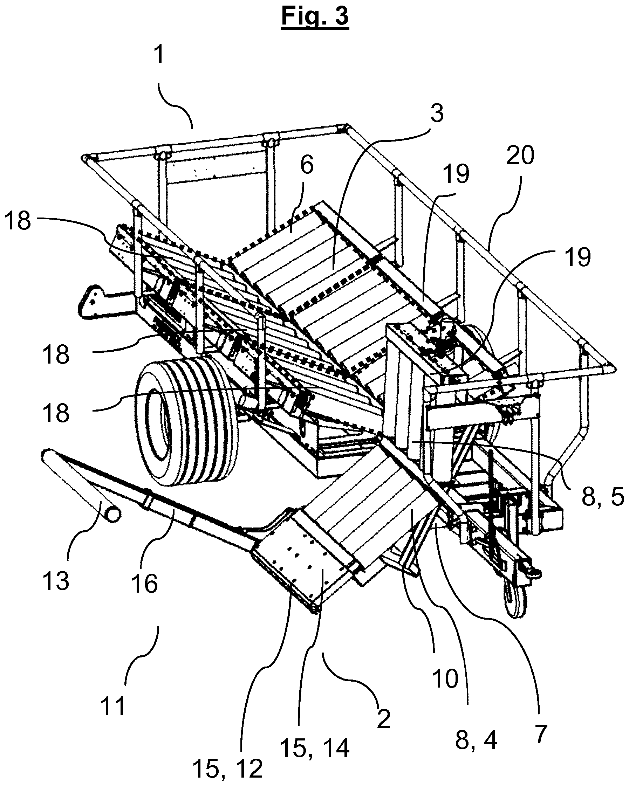

Figur 3 bis 10 zeigen alle einen besonders bevorzugten erfindungsgemäßen Ballentransportwagen 1 in verschiedenen Ansichten.

Wie in den Figuren zu erkennen ist, weist der Ballentransportwagen 1 eine Hebevorrichtung 2 und eine Rollenbahn 3 auf.

Die Hebevorrichtung 2 dient sowohl dazu, um Ballen vom Boden aufzunehmen und auf der Rollenbahn 3 abzulegen, als auch dazu um Ballen, welche auf der Rollenbahn 3 abgelegt sind, wieder am Boden abzuladen.

Wie dargestellt, ist die Rollenbahn 3 bevorzugt v-förmig ausgebildet, sodass diese den abgelegten Ballen einen seitlichen Halt bietet. Die Rollenbahn 3 weist dazu zwei in einem stumpfen Winkel zueinander vorliegende Schenkel 4, 5 auf, die jeweils eine Rollenfläche der Rollenbahn 3 bilden. Die einzelnen Rollen 6 sind dabei mit ihrer Längsrichtung bzw. Drehachse quer zur Längsrichtung des Ballentransportwagens 1 ausgerichtet und bevorzugt vom Zentrum des Ballentransportwagens 1 zu den Seiten hin ansteigend. Die Rollen 6 sind in Längsrichtung des Ballentransportwagens 1 parallel und bündig zueinander ausgerichtet, wobei die Rollenbahn 3 bevorzugt parallel zum Fahrgestell des Ballentransportwagens 1 ausgerichtet ist, also bei horizontaler Ausrichtung des Fahrgestells ebenfalls horizontal verläuft. Wie dargestellt ist der Ballentransportwagen 1 bevorzugt als einachsiger Anhänger ausgeführt.

Die Hebevorrichtung 2 weist eine Schwenkvorrichtung 7 auf, welche dazu dient, einen schwenkbaren Abschnitt 8 der Rollenbahn 3, um eine Schwenkachse 9, welche parallel zur Längsrichtung des Ballentransportwagens 1 liegt, zu schwenken. Dazu ist der schwenkbare Abschnitt 8 der Rollenbahn 3 an einem Rahmen 10 befestigt. Der schwenkbare Abschnitt 8 ist wie die übrige Rollenbahn 3 bevorzugt v-förmig ausgeführt und weist daher Schenkel 4, 5 mit Rollenflächen auf. Die Längsachsen bzw. Drehachsen der Rollen 4 des schwenkbaren Abschnitts 8 der Rollenbahn 3 sind quer zur Fahrtrichtung des Ballentransportwagens 1 ausgerichtet. Der Rahmen 10 ist um die Schwenkachse 9, welche parallel zur Längsrichtung des Ballentransportwagens 1 liegt, schwenkbar, beispielsweise mittels Hydraulikzylinder und Schwenkarm. Die Schwenkvorrichtung 7 ist in den Fig. 1 und 2 zur Verdeutlichung des erfindungsgemäßen Prinzips schematisch als Kolbenzylinder dargestellt, wobei dies nicht einschränkend zu verstehen ist, da viele Vorrichtungen bekannt sind, welche dazu geeignet sind den Rahmen 10 um die Schwenkachse 9 zu schwenken.

Am seitlichen Ende des Rahmens 10 liegt eine Ballengabel 11 mit zwei Zinken 12, 13 vor, wobei die der Rollenbahn 3 zugewandte erste Zinke 12 der Ballengabel 11 bevorzugt ortsfest am Rahmen 10 vorliegt und dessen äußeres Ende bildet, welches bei Anheben eines Ballens zuerst mit dem Ballen in Kontakt kommt.

Bevorzugt ist am Rahmen 10 eine Platte 14 angebracht, welche bündig an den Schenkel 4 des schwenkbaren Abschnitts 8 der Rollenbahn 3 anschließt und sich bis zur ersten Zinke 12 erstreckt.

Wie in den Fig. 3-10 dargestellt kann die erste Zinke 12 Teil der Platte 14 sein, sodass dieser als Aufnahmeplatte 15 ausgeführt ist. Die erste Zinke 12 ist dabei ein abgerundeter Bereich am äußersten Ende der Aufnahmeplatte 15.

Die zweite Zinke 13 der Ballengabel 11 liegt beabstandet zur ersten Zinke 12 vor und ist mit einem Arm, bevorzugt einem Teleskoparm 16, am Rahmen 10 gelagert. Der Arm bzw. Teleskoparm 16 ist um eine Achse 17 parallel zur Schwenkachse 9 des Rahmens 10 schwenkbar, beispielsweise durch einen Hydraulikzylinder, welcher an einem Schwenkhebel angreift. Die Achse 17 verläuft bevorzugt annähernd durch die Längsachse der ersten Zinke 12, sodass mit dem Arm bzw. Teleskoparm 16 die zweite Zinke 13 um die erste Zinke 12 geschwenkt werden kann, wahlweise hin zum oder weg vom schwenkbaren Abschnitt 8 der Rollenbahn 3. Die zweite Zinke 13 ist bevorzugt als Zylinder ausgeführt und kann bevorzugt am vorderen Ende anstelle einer ebenen Stirnfläche eine Rundung in Form einer Kuppel aufweisen.

Ebenso kann die erste Zinke 12 bzw. die Aufnahmeplatte 15 am vorderen Ende eine Rundung aufweisen.

Wie in Fig. 3 durch gepunktete Linien veranschaulicht wurde, schließen an den schwenkbaren Abschnitt 8 der Rollenbahn 3 weitere Abschnitte 18 an, wobei die Rollen 6 jedes Abschnitts 8, 18 jeweils unabhängig von den anderen Abschnitten 8, 18 antreibbar sind.

Der Antrieb der Rollen 6 befindet sich bevorzugt unter Abdeckungen 19.

Der Ballentransportwagen 1 weist bevorzugt an seiner Vorder- und Rückseite eine erhöhte Begrenzung auf. Der Ballentransportwagen 1 weist bevorzugt an seiner der Hebevorrichtung 2 abgewandten Längsseite eine erhöhte Begrenzung auf. Der Ballentransportwagen 1 weist, bevorzugt an seiner der Hebevorrichtung 2 zugewandten Längsseite, eine erhöhte Begrenzung auf, welche sich über die nicht schwenkbaren Abschnitte 18 erstreckt. Bevorzugt sind all diese Begrenzungen vorhanden, bevorzugt als Rahmenkonstruktion 20, bevorzugt aus Profilelementen wie Rundrohren.

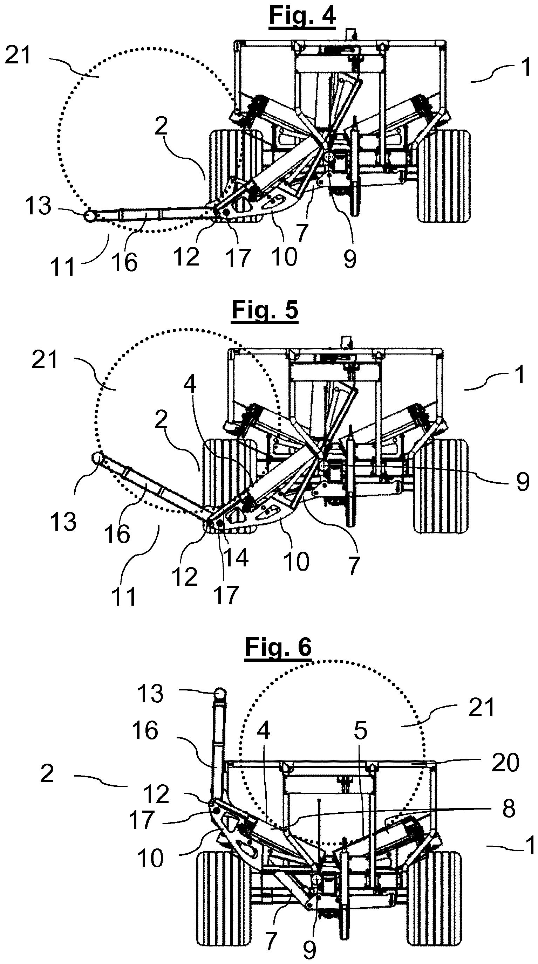

Wie beispielsweise in Fig. 3 erkennbar ist, weist das Fahrgestell des Ballentransportwagens 1 bevorzugt einen rechteckigen Rahmen aus Profilstahl auf, welcher im Bereich der Ballengabel 11 freigestellt ist, um die Schwenkbewegung des Rahmens 10 bzw. der Schwenkvorrichtung 7 nicht zu behindern. Wie in den Fig. 4-6 zu erkennen ist, kann die Schwenkachse 9 außermittig zur Wagenmitte in Richtung der Hebevorrichtung 2, insbesondere Ballengabel 11 versetzt angeordnet sein. Die Schwenkvorrichtung 7 weist einen Schwenkarm auf, dessen eines Ende an einem Punkt des Rahmens 10 gelagert ist, der einen größeren Abstand zur Wagenmitte aufweist als die Schwenkachse 9 und dessen anderes Ende an einem Punkt des Fahrgestells gelagert ist, welcher niedriger als die Schwenkachse 9 liegt. Der Schwenkarm wird beispielsweise durch einen Hydraulikzylinder oder einen Spindelantrieb bewegt.

In der ersten Endposition der Schwenkvorrichtung 7, wie in Fig. 2, 5 und 6 dargestellt, liegt der Rahmen 10 waagrecht, sodass der schwenkbare Abschnitt 8 der Rollenbahn 3 bündig mit den folgenden Abschnitten 18 der Rollenbahn 3 liegt. In dieser Position liegen die beiden gegenüberliegenden Schenkel 4, 5 der v-förmigen Rollenbahn 3 symmetrisch um die Vertikale, wobei diese zur Horizontalen jeweils einen Winkel von 20 bis 30 Grad, bevorzugt 25 Grad einschließen.

In der zweiten Endposition der Schwenkvorrichtung 7, wie in Fig. 1, 3, 4 und 7-9 dargestellt, ist der Rahmen 10 bezüglich der Horizontalen aufgekippt, zumindest soweit, dass der der Ballengabel 11 zugewandte Schenkel 4 der v-förmigen Rollenbahn 3 abschüssig verläuft, bevorzugt in einem Winkel von 20 bis 45 Grad, insbesondere 30 bis 40 Grad, insbesondere 35 Grad bezüglich der Horizontalen. Der Rahmen 10 kann bevorzugt von der Horizontalen ausgehend bis zu einem Winkel von 40-75 Grad schwenkbar sein.

Folgend wird die Arbeitsweise der Vorrichtung anhand der Figuren erklärt.

Um einen Rundballen 21 vom Boden aufzunehmen, werden im ersten Schritt der Rahmen 10 um die Schwenkachse 9 und die zweite Zinke 13 um die Achse 17 ausgeschwenkt, bis die zweite Zinke 13 und die erste Zinke 12 knapp über dem Boden und in etwa parallel zu diesem liegen. Danach wird der Ballentransportwagen 1 auf den Rundballen 21 zubewegt, sodass dieser zwischen die Zinken 12, 13 der Ballengabel 11 gelangt, wie in den Fig. 1 und 4 erkennbar. Die Ballengabel 11 kann durch Verstellen bzw. Steuern des Teleskoparms 16 an die Größe des Rundballens 21 angepasst werden.

Im zweiten Schritt wird die zweite Zinke 13 um die Achse 17 in Richtung des Rahmens 10 geschwenkt, bis der Rundballen 21 an der Platte 14 bzw. am Schenkel 4 des schwenkbaren Abschnitts 8 der Rollenbahn 3 zur Anlage kommt, wie in Fig. 5 veranschaulicht ist.

Im dritten Schritt wird der Rahmen 10 um die Schwenkachse 9 zurück in die Horizontale geschwenkt, wobei der Rundballen 21 in Richtung des zweiten Schenkels 5 rollt bzw. rutscht, sobald der erste Schenkel 4 ausreichend in Richtung der Wagenmitte nach unten geneigt ist. Diese Bewegung des Rundballens 21 kann durch weiteres Verschwenken der zweiten Zinke 13 in Richtung des Rahmens 10 unterstützt werden. Wenn der Rahmen 10 in der horizontalen Position ist, liegt der Rundballen 21 mittig zwischen den beiden Schenkeln 4, 5 des schwenkbaren Abschnitts 8, wie in Fig. 6 veranschaulicht ist.

Schritt zwei und drei können auch zeitgleich oder zeitlich überlappend ausgeführt werden, indem die Schwenkbewegung der zweiten Zinke 13 und der Schwenkvorrichtung 7 zeitgleich oder zeitlich versetzt gestartet und/oder beendet werden.

Im vierten Schritt kann der Rundballen 21 durch Antrieb der Rollen 6 des schwenkbaren Abschnitts 8 auf den folgenden Abschnitt 18 transportiert werden, wobei dies durch Antrieb der Rollen des folgenden Abschnitts 18 unterstützt werden kann.

Indem alle freien, also noch nicht durch einen vorhergehenden Rundballen 21 belegten, Abschnitte 18 angetrieben werden, kann der Rundballen 21 auf dem ersten freien Abschnitt 18 platziert werden, wobei der Antrieb dieses Abschnitts 18 gestoppt wird, sobald der Rundballen 21 seine Endposition erreicht hat.

Sobald der Rundballen 21 den schwenkbaren Abschnitt 8 verlassen hat, kann die Hebevorrichtung 2 erneut ausgeschwenkt werden, um einen weiteren Rundballen aufzunehmen, bis alle Abschnitte 18 und der schwenkbare Abschnitt 8 belegt sind. Mit dem abgebildeten Ballentransportwagen 1 können somit vier Rundballen 21 transportiert werden.

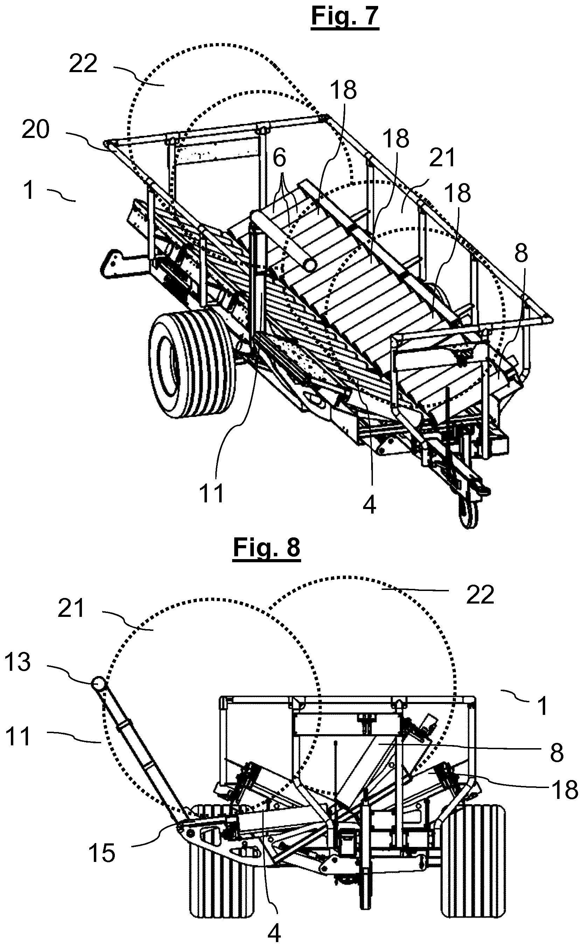

Beim Transport sind die Rundballen 21 rundum durch die Rahmenkonstruktion 20 und die zweite Zinke 13 gesichert, wie in Fig. 6 und 7 erkennbar ist.

Das Abladen eines Rundballens 21 ist in den Fig. 7-10 veranschaulicht. Beispielsweise sind wie in Fig. 7 dargestellt zwei Rundballen 21, 22 am Ballentransportwagen 1 vorhanden. Der hintere Rundballen 22 befindet sich am hinteren Abschnitt 18 der Rollenbahn 3. Der abzuladende Rundballen 21 wurde bereits auf den schwenkbaren Abschnitt 8 befördert, indem die Rollen 6 des mittleren Abschnitts 18 und des vorderen Abschnitts 18 und des schwenkbaren Abschnitts 8 angetrieben wurden.

Anstelle einen Rundballen 21 vorwärts zu bewegen, können natürlich auch gleich beide Rundballen 21, 22 j eweils um zwei Positionen nach vorne gebracht werden, indem auch der hintere Abschnitt 18 angetrieben wird, sodass der hintere Rundballen 22 am vorderen Abschnitt 18 platziert würde.

Wie in Fig. 8 veranschaulicht ist, wird im ersten Schritt des Abladens der schwenkbare Abschnitt 8 mit jener Seite, an der die Ballengabel 11 vorliegt, nach unten geschwenkt. Sobald der Schenkel 4 eine ausreichende Neigung nach unten aufweist, rollt bzw. rutscht der Rundballen 21 entlang seiner meist annähernd zylindrischen Mantelfläche nach außen in Richtung der Ballengabel 11 und wird zwischen der zweiten Zinke 13 und der Aufnahmeplatte 15 gehalten.

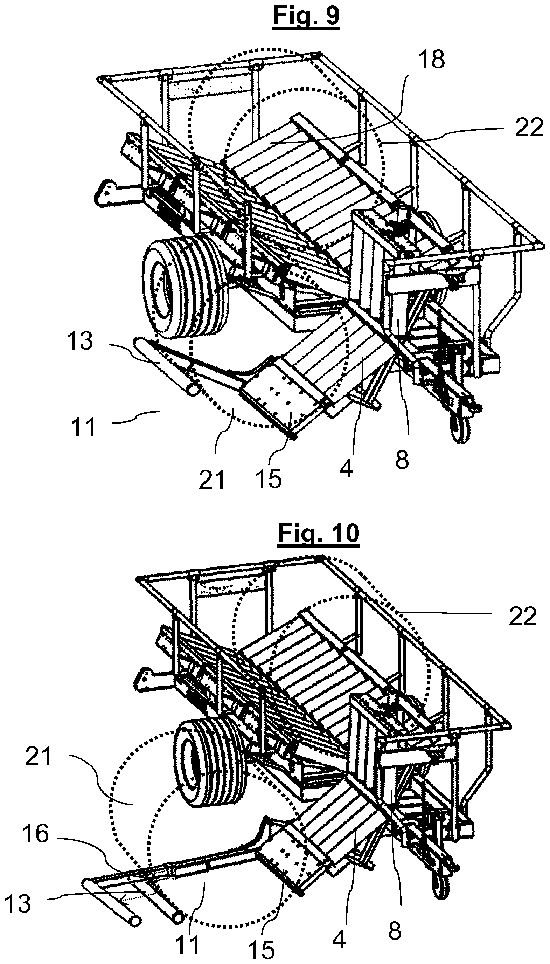

Wie in Fig. 9 dargestellt ist, wird der schwenkbare Abschnitt 8 mit jener Seite, an der die Ballengabel 11 vorliegt, soweit nach unten geschwenkt, bis die erste Zinke 12, welche durch die Aufnahmeplatte 15 gebildet ist, knapp über dem Boden ist. Die zweite Zinke 13 weist einen größeren Abstand zum Boden auf, sodass der Rundballen 21 weiterhin zwischen der zweiten Zinke 13 und der Aufnahmeplatte 15 gehalten ist.

Im zweiten Schritt wird die zweite Zinke 13 dem Boden angenähert, indem diese um die Achse 17 geschwenkt wird, bis der Rundballen 21 am Boden aufliegt, wie in Fig. 10 dargestellt ist. Durch weiteres Absenken der zweiten Zinke 13 kann diese von der Mantelfläche des Rundballens 21 weg bewegt werden, bzw. kann alternativ oder zusätzlich der Teleskoparm 16 ausgefahren werden, um den Rundballen 21 freizugeben. Sofern der Durchmesser des Rundballens 21 den Abstand zwischen den beiden Zinken 12 und 13 nicht übersteigt, kann die Hebevorrichtung 2 mit ausgefahrenem Teleskoparm 16 zurück nach oben geschwenkt werden, ohne den Rundballen 21 wieder aufzunehmen.

Alternativ ist es natürlich möglich den Ballentransportwagen 1 ein Stück zurück zu setzen und die Hebevorrichtung 2 danach wieder in die obere Ausgangsposition zu bringen.

Sobald die Hebevorrichtung 2 in der oberen Ausgangsposition ist, also der schwenkbare Abschnitt 8 der Rollenbahn 3 wieder bündig mit den Abschnitten 18 ist, kann der hintere Rundballen 22 auf diesen bewegt und in gleicher Weise hinter dem Rundballen 21 abgelegt werden.

Wie in den Fig. 9 und 10 veranschaulicht, könnte der Rundballen 22 während des Abladens des Rundballens 21 vom hinteren Abschnitt 18 bis auf den vorderen Abschnitt 18 bewegt werden.

Als Abwandlung der besonders bevorzugten Ausführungsvariante, wäre es denkbar, die Vorrichtung um 180° gedreht auf dem Anhänger zu platzieren, sodass die Hebevorrichtung 2 am hinteren Ende vorliegt und aufgenommene Rundballen 21 nach vorne bewegt werden. Beispielsweise könnten auch zumindest zwei erfindungsgemäße Hebevorrichtungen 2 vorhanden sein, beispielsweise auf gegenüberliegenden Seiten oder derselben Seite des Ballentransportwagens 1.

Zudem wäre es möglich, den schwenkbaren Abschnitt 8 zu beiden Seiten des Ballentransportwagens 1 hin schwenken zu können und dabei bevorzugt an beiden Seiten eine Ballengabel 11 vorzusehen, um Ballen wahlweise links oder rechts vom Ballentransportwagen 1 abladen zu können.

Zudem könnte die Rahmenkonstruktion 20 am hinteren Ende des Ballentransportwagens 1 wahlweise offenbar sein, sodass Ballen zusätzlich am hinteren Ende abgeworfen werden können, indem die Rollen 6 des letzten Abschnitts 18 nach hinten hin angetrieben werden, falls eine Beschädigung der Ballen in Kauf genommen wird. Zudem könnte die Ladefläche des Ballenwagens, wie nach dem Stand der Technik bekannt, zur Gänze oder nur mit den Abschnitten 18 nach hinten aufkippbar sein, um wahlweise auch Ballenstapel bilden zu können.

Die Rahmenkonstruktion 20 könnte mit Überrollbügeln bzw. als Überrollkäfig ausgeführt sein, um die Ballen auch im Fall eines Unfalls zu sichern.

## Patentansprüche

1. Ballentransportwagen (1), umfassend eine Ladefläche die eine Rollenbahn (3) aufweist, wobei die Längsachsen der Rollen (6) der Rollenbahn (3) quer zur Fahrtrichtung des Ballentransportwagens (1) angeordnet sind, wobei der Ballentransportwagen (1) seitlich eine Hebevorrichtung (2) zum Aufladen von Ballen aufweist, **dadurch gekennzeichnet, dass** jener Teil der Rollenbahn (3), bei welchem sich seitlich die Hebevorrichtung (2) befindet, ein schwenkbarer Abschnitt (8) der Rollenbahn (3) ist, der mit einer Schwenkvorrichtung (7) in jene Richtung schwenkbar ist, an der sich die Hebevorrichtung (2) befindet.

2. Ballentransportwagen (1) nach Anspruch 1, **dadurch gekennzeichnet, dass** der schwenkbare Abschnitt (8) der Rollenbahn (3) an einem Rahmen (10) befestigt ist, wobei der Rahmen (10) mit der Schwenkvorrichtung (7) um eine Schwenkachse (9), welche parallel zur Längsrichtung des Ballentransportwagens (1) liegt, schwenkbar ist.

3. Ballentransportwagen (1) nach einem der Ansprüche 1 oder 2, **dadurch gekennzeichnet, dass** die Rollenbahn (3) v-förmig ausgeführt ist, indem diese zwei in einem stumpfen Winkel zueinander angeordnete Schenkel (4, 5) aufweist, wobei die Rollen (6) jedes Schenkels (4, 5) jeweils parallel zueinander in Fahrtrichtung des Ballentransportwagens (1) aufeinanderfolgen, wobei die Längsachsen der Rollen (6) jedes Schenkels (4, 5) quer zur Fahrtrichtung und von der Mitte des Ballentransportwagens (1) zum Rand hin ansteigend liegen.

4. Ballentransportwagen (1) nach einem der Ansprüche 1 bis 3, **dadurch gekennzeichnet, dass** die Rollen (6) der Rollenbahn (3) angetrieben sind.

5. Ballentransportwagen (1) nach einem der Ansprüche 1 bis 4, **dadurch gekennzeichnet, dass** die Rollenbahn (3) in Längsrichtung des Ballentransportwagens (1) zusätzlich zum schwenkbaren Abschnitt (8) zumindest einen weiteren Abschnitt (18) aufweist, wobei die Rollen (6) jedes Abschnitts (8, 18) unabhängig von den anderen Abschnitten (8, 18) angetrieben sind.

6. Ballentransportwagen (1) nach einem der Ansprüche 1 bis 5, **dadurch gekennzeichnet, dass** die Hebevorrichtung (2) seitlich neben dem schwenkbaren Abschnitt (8) der Rollenbahn (3) vorliegt und gemeinsam mit dieser durch die Schwenkvorrichtung (7) schwenkbar ist.

7. Ballentransportwagen (1) nach einem der Ansprüche 1 bis 6, **dadurch gekennzeichnet, dass** die Hebevorrichtung (2) eine Ballengabel (11) umfasst, welche aus zwei zueinander beabstandeten Zinken (12, 13) gebildet ist, die durch einen Arm verbunden sind und die einen aufzuladenden Ballen seitlich untergreifen können.

8. Ballentransportwagen (1) nach Anspruch 7, **dadurch gekennzeichnet, dass** der schwenkbare Abschnitt (8) der Rollenbahn (3) und die dieser zugewandt liegende Zinke (12) an einem gemeinsamen Rahmen (10) befestigt sind, wobei der Rahmen (10) mit der Schwenkvorrichtung (7) um eine Schwenkachse (9), welche parallel zur Längsrichtung des Ballentransportwagens (1) liegt, schwenkbar ist.

9. Ballentransportwagen (1) nach Anspruch 8, **dadurch gekennzeichnet, dass** die dem schwenkbaren Abschnitt (8) zugewandte Zinke (12) der Ballengabel (11) in gerader Verlängerung der der Ballengabel (11) zugewandten Rollenfläche vorliegt, wobei die besagte Zinke (12) dadurch gebildet ist, dass diese ein abgerundeter oder umgebogener Randbereich einer Platte (14) ist, welche bündig an die der Ballengabel (11) zugewandten Rollenfläche anschließt.

10. Ballentransportwagen (1) nach einem der Ansprüche 7 bis 9, **dadurch gekennzeichnet, dass** der Arm, mit welchem die dem schwenkbaren Abschnitt (8) zugewandte Zinke (12) der Ballengabel (11) mit der anderen Zinke (13) verbunden ist, um eine Achse (17) schwenkbar ist, welche parallel zur Schwenkachse (9) der Schwenkvorrichtung (7) liegt.

11. Ballentransportwagen (1) nach einem der Ansprüche 7 bis 10, **dadurch gekennzeichnet, dass** der besagte Arm ein Teleskoparm (16) ist, sodass der Abstand zwischen den beiden Zinken (12, 13) änderbar oder steuerbar ist.

12. Ballentransportwagen (1) nach einem der Ansprüche 1 bis 11, **dadurch gekennzeichnet, dass** der Ballentransportwagen (1) eine Rahmenkonstruktion (20) aufweist, welche nach oben hin beabstandet zur Rollenbahn (3) den gesamten Ballentransportwagen (1) umrundet, mit Ausnahme des Bereichs, in welchem sich die Hebevorrichtung (2) befindet.

13. Ballentransportwagen (1) nach einem der Ansprüche 7 bis 12, **dadurch gekennzeichnet, dass** die Schwenkvorrichtung (7) eine erste Endposition aufweist, in welcher der schwenkbare Abschnitt (8) der Rollenbahn (3) bündig an den nicht ausschwenkbaren Teil der Rollenbahn (3) anschließt, sodass beide Schenkel (4, 5) des v-förmig ausgeführten schwenkbaren Abschnitts (8) von der Mitte des Ballentransportwagens ausgehen nach außen ansteigend ausgerichtet sind und eine zweite Endposition, bei welcher der der Ballengabel (11) zugewandte Schenkel (4) des schwenkbaren Abschnitts (8) zu der dem Schenkel (4) zugewandten Zinke (12) der Ballengabel (11) hin abschüssig verläuft.

14. Ballentransportwagen (1) nach Anspruch 13, **dadurch gekennzeichnet, dass** die andere Zinke (13) der Ballengabel (11) zwischen einer ersten Endposition und einer zweiten Endposition schwenkbar ist, wobei in der zweiten Endposition der Schwenkvorrichtung (7) betrachtet, die andere Zinke (13) in ihrer ersten Endposition auf einer Höhe mit der dem Schenkel (4) zugewandten Zinke (12) der Ballengabel (11) liegt und in ihrer zweiten Endposition die andere Zinke (13) höher liegt als die dem Schenkel (4) zugewandten Zinke (12).

15. Ballentransportwagen (1) nach einem der Ansprüche 1 bis 14, **dadurch gekennzeichnet, dass** dieser ein zumindest einachsiger nicht selbstfahrender Anhänger ist.

## Claims

1. A bale dolly (1), comprising a load area having a roller track (3), wherein the longitudinal axes of the rollers (6) of the roller track (3) are arranged transversely to the travelling direction of the bale dolly (1), wherein the bale dolly (1) has a lifting device (2) for loading bales on its side, **characterised in that**
the part of the roller track (3) where the lifting device (2) is located on the side is a pivotable section (8) of the roller track (3), which is pivotable towards where the lifting device (2) is located by a pivoting device (7).

2. The bale dolly (1) of claim 1, **characterised in that** the pivotable section (8) of the roller track (3) is attached to a frame (10), which frame (10) is pivotable about a pivoting axis (9), which is parallel to the longitudinal direction of the bale dolly (1), by the pivoting device (7).

3. The bale dolly (1) of any one of claims 1 or 2, **characterised in that** the roller track (3) is designed to be v-shaped by having two legs (4, 5) arranged with respect to one another at an obtuse angle, wherein the rollers (6) of each leg (4, 5) each succeed one another in parallel in the travelling direction of the bale dolly (1), wherein the longitudinal axes of the rollers (6) of each leg (4, 5) are transverse to the travelling direction and increase from the centre of the bale dolly (1) to the periphery thereof.

4. The bale dolly (1) of any one of claims 1 to 3, **characterised in that** the rollers (6) of the roller track (3) are driven.

5. The bale dolly (1) of any one of claims 1 to 4, **characterised in that** the roller track (3) has at least one further section (18) in the longitudinal direction of the bale dolly (1) in addition to the pivotable section (8), wherein the rollers (6) of each section (8, 18) are driven independently of the other sections (8, 18).

6. The bale dolly (1) of any one of claims 1 to 5, **characterised in that** the lifting device (2) is present on the side adjacent to the pivotable section (8) of the roller track (3) and is pivotable together with the same by the pivoting device (7).

7. The bale dolly (1) of any one of claims 1 to 6, **characterised in that** the lifting device (2) comprises a bale fork (11), which is formed out of two cogs (12, 13) spaced apart from one another, which are connected by an arm and can laterally engage under a bale to be loaded.

8. The bale dolly (1) of claim 7, **characterised in that** the pivotable section (8) of the roller track (3) and the cog (12) facing the same are attached to a common frame (10), which frame (10) is pivotable about a pivoting axis (9), which is parallel to the longitudinal direction of the bale dolly (1), by the pivoting device (7).

9. The bale dolly (1) of claim 8, **characterised in that** the cog (12) of the bale fork (11) facing the pivotable section (8) is present in a straight extension of the roller surface facing the bale fork (11), wherein said cog (12) is formed by being a rounded or folded peripheral area of a plate (14), which joins flush with the roller surface facing the bale fork (11).

10. The bale dolly (1) of any one of claims 7 to 9, **characterised in that** the arm by which the cog (12) of the bale fork (11) facing the pivotable section (8) is connected to the other cog (13) is pivotable about an axis (17), which is parallel to the pivoting axis (9) of the pivoting device (7).

11. The bale dolly (1) of any one of claims 7 to 10, **characterised in that** said arm is a telescopic arm (16), so that the distance between the two cogs (12, 13) is changeable or controllable.

12. The bale dolly (1) of any one of claims 1 to 11, **characterised in that** the bale dolly (1) has a frame design (20) which, upwardly spaced apart from the roller track (3), surrounds the entire bale dolly (1) with the exception of the area where the lifting device (2) is located.

13. The bale dolly (1) of any one of claims 7 to 12, **characterised in that** the pivoting device (7) has a first end position, in which the pivotable section (8) of the roller track (3) joins flush with the not fully pivotable part of the roller track (3), so that both legs (4, 5) of the pivotable section (8) designed to be v-shaped extend in an outwardly ascending manner from the centre of the bale dolly, and a second end position, in which the leg (4) of the pivotable section (8) facing the bale fork (11) runs in a downward slope towards the cog (12) of the bale fork (11) facing the leg (4).

14. The bale dolly (1) of claim 13, **characterised in that** the other cog (13) of the bale fork (11) is pivotable between a first end position and a second end position, wherein, viewed in the second end position of the pivoting device (7), the other cog (13) is in its first end position on a level with the cog (12) of the bale fork (11) facing the leg (4) and in its second end position the other cog (13) is higher than the cog (12) facing the leg (4).

15. The bale dolly (1) of any one of claims 1 to 14, **characterised in that** it is an at least uniaxial, non-self-driving trailer.

## Revendications

1. Chariot de transport de balles (1), comprenant une surface de chargement qui présente un transporteur à rouleaux (3), les axes longitudinaux des rouleaux (6) du transporteur à rouleaux (3) étant disposés transversalement au sens de la marche du chariot de transport de balles (1), le chariot de transport de balles (1) présentant un dispositif de levage (2) latéral pour charger des balles, caractérisé en ce
la partie du transporteur à rouleaux (3) à laquelle se trouve le dispositif de levage (2) latéral est une partie pivotante (8) du transporteur à rouleaux (3), qui peut être pivotée par un dispositif de pivotement (7) dans la direction où se trouve le dispositif de levage (2).

2. Chariot de transport de balles (1) selon la revendication 1, **caractérisé en ce que** la partie pivotante (8) du transporteur à rouleaux (3) est fixée à un cadre (10), le cadre (10) pouvant être pivoté par le dispositif de pivotement (7) autour d'un axe de pivotement (9) qui est parallèle à la direction longitudinale du chariot de transport de balles (1).

3. Chariot de transport de balles (1) selon l'une des revendications 1 ou 2, **caractérisé en ce que** le transporteur à rouleaux (3) est conçu en forme de V en présentant deux branches (4, 5) disposées à un angle obtus l'une par rapport à l'autre, les rouleaux (6) de chaque branche (4, 5) se succèdent parallèlement les uns aux autres dans le sens de la marche du chariot de transport de balles (1), les axes longitudinaux des rouleaux (6) de chaque branche (4, 5) étant situés transversalement au sens de la marche et montant du centre du chariot de transport de balles (1) vers le bord.

4. Chariot de transport de balles (1) selon l'une des revendications 1 à 3, **caractérisé en ce que** les rouleaux (6) du transporteur à rouleaux (3) sont actionnés.

5. Chariot de transport de balles (1) selon l'une des revendications 1 à 4, **caractérisé en ce que** le transporteur à rouleaux (3) présente, en plus de la partie pivotante (8), au moins une autre partie (18) dans le sens longitudinal du chariot de transport de balles (1), les rouleaux (6) de chaque partie (8, 18) étant actionnés indépendamment des autres parties (8, 18).

6. Chariot de transport de balles (1) selon l'une des revendications 1 à 5, **caractérisé en ce que** le dispositif de levage (2) se trouve à côté de la partie pivotante (8) du transporteur à rouleaux (3) et peut être pivoté avec ce dernier par le dispositif de pivotement (7).

7. Chariot de transport de balles (1) selon l'une des revendications 1 à 6, **caractérisé en ce que** le dispositif de levage (2) comprend une fourche à balles (11) qui est formée de deux dents espacées (12, 13) qui sont reliées par un bras et qui peuvent s'engager latéralement au-dessous d'une balle à charger.

8. Chariot de transport de balles (1) selon la revendication 7, **caractérisé en ce que** la partie pivotante (8) du transporteur à rouleaux (3) et la dent (12) qui lui fait face sont fixées à un cadre commun (10), le cadre (10) pouvant être pivoté par le dispositif de pivotement (7) autour d'un axe de pivotement (9) qui est parallèle à la direction longitudinale du chariot de transport de balles (1).

9. Chariot de transport de balles (1) selon la revendication 8, **caractérisé en ce que** la dent (12) de la fourche à balles (11) tournée vers la partie pivotante (8) est un prolongement droit de la surface des rouleaux tournée vers la fourche à balles (11), ladite dent (12) étant formée par une zone de bord arrondie ou pliée d'une plaque (14) qui est à fleur de la surface des rouleaux tournée vers la fourche à balles (11).

10. Chariot de transport de balles (1) selon l'une des revendications 7 à 9, **caractérisé en ce que** le bras, par lequel la dent (12) de la fourche à balles (11) tournée vers la partie pivotante (8) est reliée avec l'autre dent (13), peut pivoter autour d'un axe (17) qui est parallèle à l'axe de pivotement (9) du dispositif de pivotement (7).

11. Chariot de transport de balles (1) selon l'une des revendications 7 à 10, **caractérisé en ce que** ledit bras est un bras télescopique (16) de sorte que la distance entre les deux dents (12, 13) est modifiable ou contrôlable.

12. Chariot de transport de balles (1) selon l'une des revendications 1 à 11, **caractérisé en ce que** le chariot de transport de balles (1) présente une construction de cadre (20) qui, à distance du transporteur à rouleaux (3) vers le haut, entoure l'ensemble du chariot de transport de balles (1), à l'exception de la zone dans laquelle se trouve le dispositif de levage (2).

13. Chariot de transport de balles (1) selon l'une des revendications 7 à 12, **caractérisé en ce que** le dispositif de pivotement (7) présente une première position finale dans laquelle la partie pivotante (8) du transporteur à rouleaux (3) est à fleur de la partie non pivotante du transporteur à rouleaux (3) de sorte que les deux branches (4, 5) de la partie pivotante (8) en forme de V sont orientées de manière à s'élever vers l'extérieur à partir du centre du chariot de transport de balles et une deuxième position finale dans laquelle la branche (4) de la partie pivotante (8) tournée vers la fourche à balles (11) est en pente par rapport à la dent (12) de la fourche à balles (11) tournée vers la branche (4).

14. Chariot de transport de balles (1) selon la revendication 13, **caractérisé en ce que** l'autre dent (13) de la fourche à balles (11) peut pivoter entre une première position finale et une deuxième position finale, dans la deuxième position finale du dispositif de pivotement (7) l'autre dent (13), dans sa première position finale, se trouvant au même niveau que la dent (12) de la fourche à balles (11) tournée vers la branche (4) et, dans sa deuxième position finale, l'autre dent (13) se trouvant plus haut que la dent (12) tournée vers la branche (4).

15. Chariot de transport de balles (1) selon l'une de la revendication 1 à 14, **caractérisé en ce que** ledit chariot est une remorque non-automoteur à au moins un essieu.
